# EUROPÄISCHE PATENTSCHRIFT

(11) **EP 2 466 119 B1**
(45) Veröffentlichungstag und Bekanntmachung des Hinweises auf die Patenterteilung: **28.02.2018**
(21) Anmeldenummer: 11182136.9
(22) Anmeldetag: 21.09.2011
(51) Int. Cl.: F03C 1/047, F03C 1/04, F04B 1/04, F04B 1/047, F04B 39/00, F04B 53/14, F16J 1/10, F03C 1/28, F16J 1/14

(54) **Kolben für Radialkolbenmaschine**
Piston for radial piston engine
Piston pour machine à piston radial

(30) Priorität: 18.12.2010 DE 102010055073
(43) Veröffentlichungstag der Anmeldung: 20.06.2012
(73) Patentinhaber: KS Gleitlager GmbH, 68789 St. Leon-Rot (DE)
(72) Erfinder: Kovacevic, Mitar, 74232 Abstatt (DE); Höne, Wilfried, 65232 Taunusstein (DE); Reinicke, Rolf, 76669 Bad Schönborn (DE); Hacker, Stefan, 76698 Ubstadt-Weiher (DE)
(74) Vertreter: DREISS Patentanwälte PartG mbB

(56) Entgegenhaltungen:
- WO-A2-2012/010241
- DE-A1-102009 020 109
- US-A- 3 783 749

## Beschreibung

Die Erfindung betrifft einen Kolben für eine Radialkolbenmaschine, mit einer in Bewegungsrichtung des Kolbens im Betrieb erstreckten Kolbenlängsachse, mit zwei axialen Enden und einem in Umfangsrichtung erstreckten Kolbenmantel, mit einer am einen Ende in einer Lagersitzausnehmung angeordneten ungefähr halbzylindrischen metallischen Lagerschale zur drehbaren Aufnahme einer Wälzrolle, wobei eine Längsachse der Lagerschale und der Wälzrolle senkrecht zur Kolbenlängsachse verläuft, wobei die Lagerschale mit metallischem Material des Kolbens verschweißt ist und hierdurch ihren Festsitz erhält, wobei die Lagersitzausnehmung in Kolbenlängsrichtung hinterschnittfrei ausgebildet ist, und wobei die Lagerschale die Lagersitzausnehmung mit ihren beiden Umfangsenden in Richtung der Kolbenlängsachse überragt und dabei über eine axiale Stirnseite des lagerschalenseitigen Endes des Kolbens vorsteht, und wobei die Lagerschale eine Umfangslänge von mehr als 180° aufweist.

Radialkolbenmaschinen und Kolben hierfür sind umfangreich bekannt geworden. Typischerweise begrenzt ein in einem Zylinderraum der Radialkolbenmaschine in radialer Richtung gleitverschieblich gelagerter Kolben radial innen ein fluides Medium und liegt radial außen über die Wälzrolle gegen eine in Umfangsrichtung geschlossene und verrundet ausgebildete Nockenbahn an. Es besteht stets die Aufgabe, die Lagerschale unverlierbar und spielfrei, also festsitzend, an oder in der Lagersitzausnehmung am betreffenden Ende des Kolbens anzuordnen. Dies wurde seither dadurch realisiert, dass aus dem Kolbenmaterial im Bereich der Umfangsenden der Lagerschale ein Übergriff ausgebildet ist, gegen den die eingesetzte, insbesondere eingeklipste Lagerschale mit ihren Umfangsenden im Wesentlichen wenigstens nahezu anliegt, z. B. wie gemäß WO 2007/113449 A1. Außerdem ist die Lagerschale häufig zusätzlich klemmschlüssig verstemmt, wodurch Stanz- und/oder Pressvorgänge an der Lagerschale ausgeführt werden, was die Maßhaltigkeit der Lagerschale beeinträchtigt und außerdem aufwendig ist. Infolge des erwähnten Übergriffs des Kolbenmaterials im Bereich der Umfangsenden der Lagerschale ist eine Endbearbeitung oder Kalibrierung der Lagersitzausnehmung nur sehr aufwendig möglich, oder es wird auf eine solche Endbearbeitung/Kalibrierung häufig verzichtet.

Die nicht vorveröffentlichte WO 2012/010241 A2 offenbart einen Kolben für eine Radialkolbenmaschine, bei dem die Lagerschale in der Lagersitzausnehmung des Kolbens nicht durch Schweißen, sondern durch Kleben oder durch Nieten befestigt ist.

US 3,783,749 zeigt einen Kolben für eine Radialkolbenmaschine, wobei eine Lagerschale in einer Lagersitzausnehmung formschlüssig gehalten ist, indem sie sich mit einem Ansatz durch eine in der Lagerausnehmung mündenden Längsöffnung des Kolbens hindurcherstreckt. Es gibt Ausführungsformen, bei denen die Lagersitzausnehmung eine Umfangslänge von weniger als 180° aufweist.

Ein Kolben mit den Merkmalen des Oberbegriffs des Anspruchs 1 ist bekannt aus DE 10 2009 020 109 A1 Ausführungsbeispiel gemäß Figur 3. Mit dieser Druckschrift wurde bereits vorgeschlagen, bei dem Kolben eine in Kolbenlängsrichtung hinterschnittfreie Lagersitzausnehmung auszubilden, die als solche einfach herstellbar sei; diese Lagersitzausnehmung weist eine Umfangslänge von deutlich mehr als 180° auf und ist im Querschnitt betrachtet U-förmig mit zueinander parallel verlaufenden Schenkeln der U-Form. Hier wird auf eine maßhaltige Ausgestaltung geringeren Wert gelegt, da eine Lagerschale in Form eines tiefgezogenen ebenfalls U-förmigen und mit Übermaß ausgebildeten Profils in diese Lagerausnehmung eingesetzt, dort stoffschlüssig fixiert und erst danach zur drehbaren Aufnahme einer Wälzrolle endbearbeitet wird. Das tiefgezogene Profil der Lagerschale ist an seinen Umfangsenden mit einer deutlich größeren Wanddicke ausgebildet, um eine Hinterschneidung oder Umschlingung des darin einsetzbaren Wälzkörpers auszubilden. Diese Verdickung wird vorzugsweise erst im Zuge der vorerwähnten Endbearbeitung des bezüglich des Kolbens stoffschlüssig fixierten Profils der Lagerschale ausgeführt. Bei einem Ausführungsbeispiel gemäß Figur 2 von DE 10 2009 020 109 A1 wird eine gerollte Lagerschale mit in Umfangsrichtung im wesentlichen konstanter Wanddicke verwandt, allerdings steht sie nicht mit ihren beiden Umfangsenden in Richtung der Kolbenlängsachse über eine axiale Stirnseite des lagerschalenseitigen Endes des Kolbens vor.

Der vorliegenden Erfindung liegt die Aufgabe zugrunde, einen Kolben der eingangs genannten Art dahingehend zu verbessern, dass eine einfachere Herstellbarkeit gewährleistet ist.

Diese Aufgabe wird bei einem Kolben der genannten Art erfindungsgemäß dadurch gelöst, dass die Lagerschale eine aus einem platinenförmigen Abschnitt gerollte Lagerschale mit in Umfangsrichtung im wesentlichen konstanter Wanddicke ist, und dass die Schweißverbindung im Bereich der axialen Stirnseite des lagerschalenseitigen Endes des Kolbens und zu einer radial äußeren Seite der Lagerschale ausgebildet ist und dass die Lagersitzausnehmung eine Umfangslänge bezüglich der Längsachse der Lagerschale von höchstens 180° aufweist.

Bei dem erfindungsgemäßen Kolben wird eine gerollte Lagerschale verwendet, die demgemäß ausgehend von einem abgelängten platinenförmigen Abschnitt eine im Wesentlichen konstante Wanddicke aufweist. Wenn vorstehend von einer konstanten Wanddicke die Rede ist, so ist hiermit gemeint, dass die Wanddicke an den beiden Umfangsenden keinesfalls zunimmt, um hierdurch eine formschlüssige Halterung der Wälzrolle zu bilden; geringfügige im µm-Bereich liegende Variationen der Wanddicke, die aus anderen Gründen häufig vorgesehen werden, sind hiervon unberührt.

Weiter erfindungsgemäß überragt die gerollte Lagerschale die Lagersitzausnehmung mit ihren Umfangsenden, oder anders ausgedrückt: Eine endseitige axiale Stirnfläche des Kolbens ist in axialer Richtung hinter den Umfangsenden der Lagerschale zurückgesetzt, so dass die Lagerschale über diese Stirnfläche des Kolbens emporsteht. Dies eröffnet die Möglichkeit, dass die stoffschlüssige Verbindung zwischen der axialen Stirnseite des lagerschalenseitigen Endes des Kolbens und einer radial äußeren Seite der Lagerschale ausgebildet ist. Die stoffschlüssige Verbindung hat einen gewissen Abstand, beispielsweise im Bereich einiger weniger Millimeter, insbesondere 1 bis 3 mm, vom Umfangsende der Lagerschale. Hierbei ist es möglich, dass die stoffschlüssige Verbindung, vorzugsweise im Bereich beider Umfangsenden, nur punktweise ausgebildet wird oder sich wie eine Naht entlang einer in Breitenrichtung der Lagerschale erstreckten Trennfuge zwischen Lagerschale und Kolben erstreckt. Es kann beispielsweise eine über wenigstens 2/3 der Breite der Lagerschale erstreckte stoffschlüssige Naht zwischen Lagerschale und Kolben hergestellt werden. Zumindest grundsätzlich, alternativ oder zusätzlich, wäre es aber auch denkbar, dass die Lagerschale im Bereich ihres Scheitels stoffschlüssig mit dem Material des Kolbens verbunden wird. Auch dies erweist sich herstellungstechnisch als einfach realisierbar und zweckmäßig.

Die Lagersitzausnehmung für die Lagerschale ist in Kolbenlängsrichtung hinterschnittfrei ausgebildet. Dies bedeutet, dass die im Wesentlichen eine Kreissegment- oder Halbzylinderform begrenzende Lagersitzausnehmung eine Umfangslänge aufweist, die höchstens einem Winkelsegment von 180° entspricht, so dass ein Werkzeug mit einem dem Durchmesser der Lagersitzausnehmung entsprechenden Außendurchmesser in Richtung der Kolbenlängsachse in die Lagersitzausnehmung eingetaucht werden kann. Auf diese Weise lässt sich eine Feinbearbeitung oder Endkalibrierung der Lagersitzausnehmung in sehr wirtschaftlicher Weise realisieren. Außerdem besteht die Möglichkeit, die Lagerschale in radialer Ebene, also ebenfalls in Richtung der Kolbenlängsachse, in ihre Montageposition am Kolben zu bringen. Sie braucht dann lediglich für die Herstellung der stoffschlüssigen Verbindung positioniert und fixiert zu werden, bis die stoffschlüssige Verbindung fertig angebracht ist.

Die Lagersitzausnehmung weist vorzugsweise eine Umfangslänge von weniger als 180°, insbesondere von höchstens 178°, insbesondere von höchstens 176° auf. Die Umfangslänge der Lagersitzausnehmung beträgt vorteilhafterweise zwischen 160° und 180°, insbesondere zwischen 170° und 180°.

Weiter erweist es sich als vorteilhaft, wenn die Lagerschale eine Umfangslänge von bis zu 250°, insbesondere von 190° bis 240°, insbesondere von 200° bis 230°, insbesondere von 200° bis 220° aufweist. Solchenfalls ist die Wälzrolle verliersicher in ihrer Lagerstelle gehalten, sie kann sich also nicht in Richtung der Kolbenlängsachse lösen, was sich insbesondere während der Montage des Kolbens, beispielsweise in einer Pumpe, aber auch im belastungsfreien Betrieb als vorteilhaft erweist. Eine derartige Verliersicherung konnte seither nur durch den eingangs erwähnten Hintergriff des Kolbenmaterials über die Umfangsenden der Lagerschale oder durch eine komplexe Ausbildung der Lagerschale realisiert werden, was aus schon erläuterten Gründen nachteilig und zudem aufwendig ist. Erfindungsgemäß wird ein solcher Hintergriff oder Übergriff des Kolbenmaterials vermieden.

Des Weiteren wird Schutz beansprucht für ein Verfahren zum Herstellen eines erfindungsgemäßen Kolbens mit den Merkmalen der Ansprüche 5 und 6.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform der Erfindung. In der Zeichnung zeigt:
Figur 1 eine perspektivische Ansicht einer Ausführungsform eines erfindungsgemäßen Kolbens für eine Radialkolbenmaschine; und
Figur 2 eine schematische Schnittansicht durch eine eine Kolbenlängsachse einschließende Längsmittelebene des Kolbens (ohne Lagerschale).

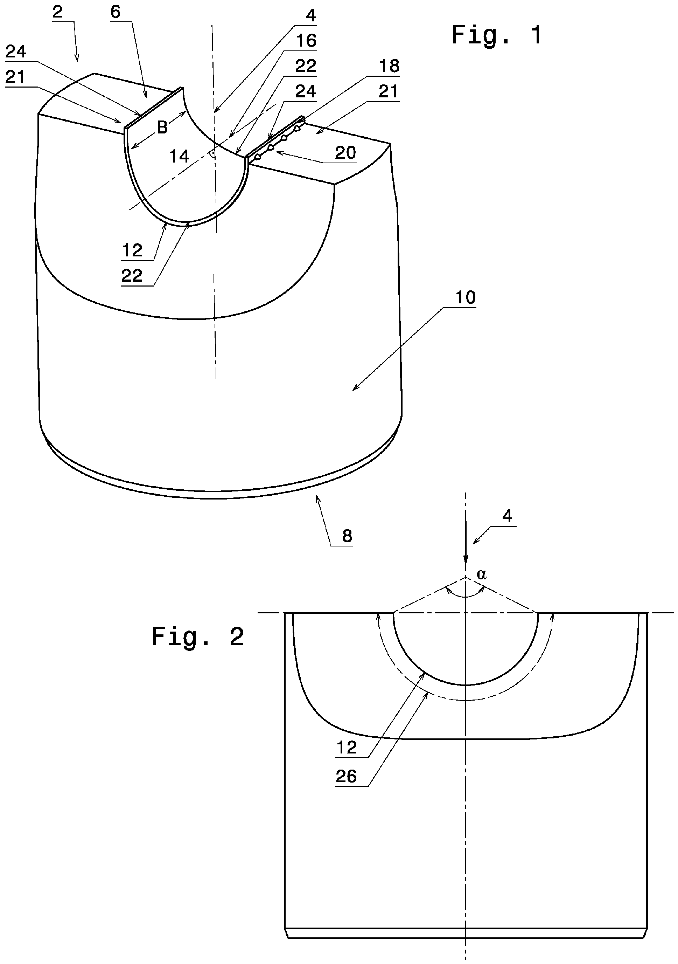

Figur 1 zeigt eine bevorzugte Ausführungsform eines insgesamt mit dem Bezugszeichen 2 bezeichneten erfindungsgemäßen Kolbens für eine Radialkolbenmaschine. Der Kolben 2 umfasst eine Kolbenlängsachse 4, entlang der sich der Kolben 2 im Betrieb hin und her bewegt, wobei diese Hin- und Herbewegung innerhalb der Radialkolbenmaschine in radialer Richtung orientiert ist. Der Kolben umfasst zwei axiale Enden 6 und 8, zwischen denen ein in Umfangsrichtung des Kolbens erstreckter Kolbenmantel 10 vorgesehen ist. Am einen Ende 6 ist ein Lagersitz in Form einer Lagersitzausnehmung 12 für eine ungefähr halbzylindrische metallische Lagerschale 14 ausgebildet. Die Lagersitzausnehmung 12 umfasst daher im Wesentlichen halbzylindrische oder kreissegmentförmige Geometrie. Die Lagersitzausnehmung 12 und die Lagerschale 14 sind so ausgebildet bzw. angeordnet, dass eine angedeutete Längsachse 16 der Lagerschale senkrecht zur Kolbenlängsachse 4 verläuft (und damit auch senkrecht zur jeweiligen radialen Richtung der nicht dargestellten Radialkolbenmaschine).

Die Lagerschale 14 ist mit dem metallischen Material des Kolbens stoffschlüssig verbunden, wobei vorzugsweise eine Schweißverbindung zum Einsatz kommt. Im beispielhaft dargestellten Fall der Figur 1 ist diese Schweißverbindung zwischen einem metallischen Rücken 18 einer Stützschicht der Lagerschale 14 und dem angrenzenden metallischen Material des Kolbens ausgebildet und mit Bezugszeichen 20 bezeichnet. Im beispielhaft dargestellten Fall ist diese stoffschlüssige Verbindung im Bereich einer Trennfuge zwischen dem metallischen Rücken 18 der Lagerschale 14 und dem angrenzenden Kolbenmaterial im Bereich des Endes 6 bzw. einer endseitigen axialen Stirnfläche 21 des Kolbens ausgebildet, die vorzugsweise im wesentlichen senkrecht zur Kolbenlängsachse verläuft. Schematisch dargestellt ist eine mehrfache punktförmige stoffschlüssige Verbindung 20, wobei auch weniger Schweißpunkte oder die Verwendung einer kontinuierlichen Nahtform, die insbesondere wenigstens die Hälfte der Breite B der Lagerschale 14 erfassen kann, denkbar ist. Ebenso denkbar wäre die Anbringung einer stoffschlüssigen Verbindung alternativ oder zusätzlich an den axialen Stirnenden 22 der Lagerschale 14, insbesondere in deren Scheitelbereich.

Wie insbesondere in Figur 2 nicht maßstabsgetreu dargestellt ist, ist die Lagersitzausnehmung 12 in Richtung der Kolbenlängsachse 4 hinterschnittfrei ausgebildet; sie weist also keine Hintergriffe auf, welche mit den Umfangsenden 24 der Lagerschale 14 formschlüssig zusammenwirken. Die Umfangslänge 26 der Lagersitzausnehmung 12 entspricht einem Winkel von höchstens 180°, insbesondere 170 bis 180°, wobei Figur 2 eine Winkel von weniger als 180° bezüglich der Längsachse 16 der Lagerschale 14 erkennen lässt. Entsprechend erkennt man aus Figur 1, dass die Lagerschale 14 mit ihren Umfangsenden 24 ungefähr in Richtung der Kolbenlängsachse 4 über die Lagersitzausnehmung 12 übersteht. Dies eröffnet zum einen in vorteilhafter Weise die Möglichkeit, die Schweißverbindung im Bereich des metallischen Rückens 18 der Lagerschale 14 entlang der Trennfuge zum Material des Kolbens auszubilden und andererseits die Möglichkeit, die Umfangslänge der Lagerschale entsprechend einem Winkel von mehr als 180°, insbesondere bis 250° auszubilden, so dass der nicht dargestellte Wälzkörper in Richtung der Kolbenlängsachse 4 verliersicher in der Lagerschale 14 gehalten ist.

Die Lagerschale 14 selbst ist ausgehend von einem platinenförmigen abgelängten Abschnitt eines Flachmaterials mit im wesentlichen konstanter Wanddicke hergestellt, und zwar als gerollte Lagerschale in einem Biegerollprozess. Die gerollte Lagerschale 14 kann dann einfach in Richtung der Kolbenlängsachse 4 in die hinterschnittfreie Lagerausnehmung 12 eingesetzt werden, die zuvor feinbearbeitet oder kalibriert werden kann.

Durch die stoffschlüssige Verbindung von Lagerschale 14 und Kolbenmaterial ist es nicht mehr erforderlich, einen Hintergriff des Kolbenmaterials im Bereich der Umfangsenden 24 der Lagerschale 14 vorzusehen und durch zusätzliche Stanz-, Press- oder Verstemmvorgänge einen klemmschlüssigen Festsitz zu erreichen, was regelmäßig mit einer Ausfallproblematik infolge der Kerbwirkung dieser Maßnahmen verbunden ist. Insgesamt lässt sich eine auf wirtschaftliche Weise herstellbare Fixierung einer gerollten Lagerschale 14 am Kolben erreichen, die zudem weitere Vorteile mit sich bringt. Insbesondere lässt sich die Lagersitzausnehmung 12 infolge des fehlenden Hintergriffs in Richtung der Kolbenlängsachse 4 auf wirtschaftliche Weise endbearbeiten bzw. kalibrieren, was seither nicht möglich war. Somit braucht eine auf Endform gebrachte gerollte Lagerschale lediglich eingesetzt und stoffschlüssig fixiert zu werden.

## Patentansprüche

1. Kolben (2) für eine Radialkolbenmaschine, mit einer in Bewegungsrichtung des Kolbens im Betrieb erstreckten Kolbenlängsachse (4), mit zwei axialen Enden (6, 8) und einem in Umfangsrichtung erstreckten Kolbenmantel (10), mit einer am einen Ende (6) in einer Lagersitzausnehmung (12) angeordneten ungefähr halbzylindrischen metallischen Lagerschale (14) zur drehbaren Aufnahme einer Wälzrolle, wobei eine Längsachse (16) der Lagerschale (14) und der Wälzrolle senkrecht zur Kolbenlängsachse (4) verläuft, wobei die Lagerschale (14) mit metallischem Material des Kolbens stoffschlüssig verschweißt ist und hierdurch ihren Festsitz erhält, wobei die Lagersi tzausnehmung (12) in Kolbenlängsrichtung (4) hinterschnittfrei ausgebildet ist, und wobei die Lagerschale (14) die Lagersitzausnehmung (12) mit ihren beiden Umfangsenden (24) in Richtung der Kolbenlängsachse (4) überragt und dabei über eine axiale Stirnseite (21) des lagerschalenseitigen Endes (6) des Kolbens vorsteht, und wobei die Lagerschale (14) eine Umfangslänge von mehr als 180°, insbesondere bis 250°, aufweist, **dadurch gekennzeichnet, dass** die Lagerschale (14) eine aus einem platinenförmigen Abschnitt gerollte Lagerschale mit in Umfangsrichtung im wesentlichen konstanter Wanddicke ist, und dass die stoffschlüssige Schweißverbindung im Bereich der axialen Stirnseite (21) des lagerschalenseitigen Endes (6) des Kolbens und zu einer radial äußeren Seite der Lagerschale (14) ausgebildet ist und dass die Lagersitzausnehmung (12) eine Umfangslänge bezüglich der Längsachse (16) der Lagerschale (14) von höchstens 180° aufweist.

2. Kolben nach einem oder mehreren der vorstehenden Ansprüche, **dadurch gekennzeichnet, dass** die Lagersitzausnehmung (12) eine Umfangslänge von weniger als 180°, insbesondere von höchstens 178°, insbesondere von höchstens 176° aufweist.

3. Kolben nach einem oder mehreren der vorstehenden Ansprüche, **dadurch gekennzeichnet, dass** die Lagersitzausnehmung (12) eine Umfangslänge von 160° bis 180°, insbesondere von 170° - 180° aufweist.

4. Kolben nach einem oder mehreren der vorstehenden Ansprüche, **dadurch gekennzeichnet, dass** die Lagerschale (14) eine Umfangslänge bis 250°, insbesondere von 190° bis 240°, insbesondere von 200° bis 230°, insbesondere von 200° bis 220° aufweist.

5. Verfahren zum Herstellen eines Kolbens (2) nach einem der vorstehenden Ansprüche, wobei der Kolben (2) mit einer Lagersitzausnehmung (12) zur Aufnahme der Lagerschale (14) ausgebildet wird und die Lagersitzausnehmung (12) in Richtung der Kolbenlängsachse (4) hinterschnittfrei ausgebildet wird, **dadurch gekennzeichnet, dass** die zuvor mit in Umfangsrichtung im wesentlichen konstanter Wanddicke gerollte Lagerschale (14) in der Lagersitzausnehmung (12) positioniert wird und zur Herstellung der stoffschlüssigen Verbindung zwischen Lagerschale (14) und Kolbenmaterial in der Montageposition durch Klemmmittel unverschieblich fixiert wird und dann die stoffschlüssige Verbindung hergestellt wird und danach die Klemmmittel gelöst werden.

6. Verfahren nach Anspruch 5, **dadurch gekennzeichnet, dass** vor dem Positionieren der Lagerschale (14) in der Lagersitzausnehmung (12) ein Feinbearbeitungs- oder Kalibriervorgang der Lagersitzausnehmung (12) ausgeführt wird, wobei ein rotierend oder hin- und hergehend angetriebenes Feinbearbeitungs- oder Kalibrierwerkzeug in Richtung der Kolbenlängsachse (4) in die Lagersitzausnehmung (12) abgesenkt wird.

## Claims

1. Piston (2) for a radial piston engine, with a longitudinal piston axis (4) extending in movement direction of the piston during operation, with two axial ends (6, 8) and a piston skirt (10) extending in circumferential direction, with an approximately semicylindrical metallic bearing shell (14) arranged in a bearing seat recess (12) at one end (6) for the rotatable receiving of a platen cylinder, wherein a longitudinal axis (16) of the bearing shell (14) and the platen cylinder extend vertical to the longitudinal piston axis (4), wherein the bearing shell (14) is welded substance-to-substance with the metallic material of the piston and is given a firm seating in this way, wherein the bearing seat recess (12) is formed free from an undercut area in the longitudinal piston direction (4), and wherein the bearing shell (14) protrudes over the bearing seat recess (12) with its two circumference ends (24) in the direction of the longitudinal piston axis (4) and projects over an axial facing side (21) of the bearing shell side end (6) of the piston, and wherein the bearing shell (14) has a circumference length of more than 180°, in particular up to 250°, **characterised in that** the bearing shell (14) is a bearing shell rolled from a plate-shaped section with a wall thickness that is substantially constant in a circumferential direction, and **in that** the substance-to-substance weld connection is formed in the area of the axial facing side (21) of the bearing shell side end (6) of the piston and to one radial outer side of the bearing shell (14), and **in that** the bearing seat recess (12) has a circumference length in relation to the longitudinal axis (16) of the bearing shell (14) of at most 180°.

2. Piston according to one or more of the preceding claims, **characterised in that** the bearing seat recess (12) has a circumference length of less than 180°, in particular of no more than 178°, in particular of no more than 176°.

3. Piston according to one or more of the preceding claims, **characterised in that** the bearing seat recess (12) has a circumference length of 160° to 180°, in particular of 170° - 180°.

4. Piston according to one or more of the preceding claims, **characterised in that** the bearing shell (14) has a circumference length of up to 250°, in particular of 190° to 240°, in particular of 200° to 230°, in particular of 200° to 220°.

5. Method for producing a piston (2) according to one of the preceding claims, wherein the piston (2) is formed with a bearing seat recess (12) for receiving the bearing shell (14) and the bearing seat recess (12) is formed free from an undercut area in the longitudinal piston axis (4), **characterised in that** the bearing shell (14) previously rolled with a substantially constant wall thickness in a circumference direction is positioned in the bearing seat recess (12) and non-displaceably fixed between the bearing shell (14) and the piston material in the installation position with clamping means for producing the substance-to-substance connection, and the substance-to-substance connection then produced, whereafter the clamping means are loosened.

6. Method according to claim 5, **characterised in that** a precision processing or calibration process is carried out for the bearing seat recess (12) prior to positioning the bearing shell (14) in the bearing seat recess (12), wherein a rotatably or reciprocally driven precision processing or calibration tool is lowered into the bearing seat recess (12) in the direction of the longitudinal piston axis (4).

## Revendications

1. Piston (2) pour une machine à piston radial, avec un axe longitudinal de piston (4) s'étendant dans une direction de déplacement du piston en fonctionnement, avec deux extrémités axiales (6, 8) et une jupe de piston (10) s'étendant dans une direction circonférentielle, avec une coquille de palier métallique approximativement semi-cylindrique (14) agencée au niveau d'une extrémité (6) dans un logement de siège de palier (12) pour la réception de manière rotative d'un cylindre de laminage, dans lequel un axe longitudinal (16) de la coquille de palier (14) et du cylindre de laminage s'étend perpendiculairement à l'axe longitudinal de piston (4), dans lequel la coquille de palier (14) est soudée avec liaison de matière au matériau métallique du piston en obtenant ainsi un ajustement serré, dans lequel le logement de siège de palier (12) est formé sans contre-dépouille dans la direction longitudinale de piston (4), et dans lequel la coquille de palier (14) du logement de siège de palier (12) dépasse avec ses deux extrémités circonférentielles (24) dans la direction de l'axe longitudinal de piston (4) et ainsi fait saillie depuis un côté avant axial (21) de l'extrémité côté coquille de palier (6) du piston, et dans lequel la coquille de palier (14) présente une longueur circonférentielle de plus de 180°, en particulier d'au plus 250°, **caractérisé en ce que** la coquille de palier (14) est une coquille de palier roulée avec une section transversale en forme de platine ayant une épaisseur de paroi sensiblement constante dans la direction circonférentielle, et **en ce que** la liaison soudée avec liaison de matière est réalisée dans la zone du côté avant axial (21) de l'extrémité côté coquille de palier (6) du piston et jusqu'à un côté radialement extérieur de la coquille de palier (14), et **en ce que** le logement de siège de palier (12) présente une longueur circonférentielle par rapport à l'axe longitudinal (16) de la coquille de palier (14) d'au plus 180°.

2. Piston selon la revendication précédente, **caractérisé en ce que** le logement de siège de palier (12) présente une longueur circonférentielle d'au moins 180°, en partuclier d'au plus 178°, en particulier d'au plus 176°.

3. Piston selon une ou plusieurs des revendications précédentes, **caractérisé en ce que** le logement de siège de palier (12) présente une longueur circonférentielle de 160° à 180°, en particulier de 170° à 180°.

4. Piston selon une ou plusieurs des revendications précédentes, **caractérisé en ce que** la coquille de palier (14) présente une longueur circonférentielle d'au plus 250°, en particulier de 190° à 240°, en particulier de 200° à 230°, en particulier de 200° à 220°.

5. Procédé pour fabriquer un piston (2) selon l'une quelconque des revendications précédentes, dans lequel le piston (2) est formé avec un logement de siège de palier (12) pour la réception de la coquille de palier (14), et le logement de siège de palier (12) est formé sans contre dépouille dans la direction de l'axe longitudinal de piston (4), **caractérisé en ce que** la coquille de palier (14) roulée préalablement avec une épaisseur de paroi sensiblement constante dans la direction circonférentielle est positionnée dans le logement de siège de palier (12) et, pour fabriquer une liaison avec liaison de matière entre la coquille de palier (14) et le matériau de piston, est fixée de manière inamovible dans la position de montage via des moyens de serrage, et ensuite la liaison avec liaison de matière est réalisée, puis les moyens de serrage sont desserrés.

6. Procédé selon la revendication 5, **caractérisé en ce qu'**avant le positionnement de la coquille de palier (14) dans le logement de siège de palier (12), une opération de finition ou de calibrage du logement de siège de palier (12) est effectuée, où un outil de finition ou de calibrage entraîné de manière rotative ou en va-et-vient est abaissé dans la direction de l'axe longitudinal de piston (4) jusque dans le logement de siège de palier (12).
